# EUROPEAN PATENT SPECIFICATION

(11) **EP 2 800 886 B1**
(45) Date of publication and mention of the grant of the patent: **09.11.2016**
(21) Application number: 12821085.3
(22) Date of filing: 20.12.2012
(51) Int. Cl.: F02B 63/04

(54) **FLEXIBLE FUEL GENERATOR AND METHODS OF USE THEREOF**
FLEXIBLER BRENNSTOFFGENERATOR UND VERWENDUNGSVERFAHREN DAFÜR
GÉNÉRATRICE À CARBURANT FLEXIBLE ET PROCÉDÉS D'UTILISATION DE CELLE-CI

(30) Priority: 04.01.2012 US 201213343597
(43) Date of publication of application: 12.11.2014
(73) Proprietor: Ini Power Systems, Inc., Morrisville, NC 27560 (US)
(72) Inventor: MARKOSKI, Larry, J., Raleigh, NC 27612 (US); SIMMONS, Timothy, C., Durham, NC 27703 (US); NANCE, Mack, L., Chapel Hill, NC 27516 (US)
(74) Representative: Hector, Annabel Mary
(86) International application number: PCT/US2012/071042
(87) International publication number: WO 2013/103542

(56) References cited:
- WO-A1-95/26464
- US-A- 5 162 662

## Description

### CROSS REFERENCE TO RELATED APPLICATION

This application is a continuation-in-part of U.S. application no. 13/343,597, filed January 4, 2012 and entitled "FLEX FUEL FIELD GENERATOR".

### BACKGROUND

There has been a proliferation of small portable electronic devices in recent years, most of which include onboard and/or detachable rechargeable batteries. Examples include laptop computers, mobile telephones, personal digital assistants, portable digital cameras, global positioning systems, and hand-held radios. The rechargeable batteries are most commonly lithium ion batteries, although other varieties are available. The small portable electronic devices typically include a removable power cord with a standard two-prong or three-prong plug, or a universal serial bus (USB) plug, for plugging into a corresponding plug receiver, which allows for recharging the onboard batteries. Also commonly available are removable power cords with a standard cigarette lighter plug, for recharging the rechargeable batteries using a cigarette lighter plug receiver in an automobile or other vehicle. Also commonly available are multi-bay chargers for multiple electronic devices and/or their detachable batteries with standard two-prong or three-prong power cords. In general these devices typically require less than 1 kW of recharging power whether from AC or DC sources.

For field operation by consumers of portable appliances such as televisions and radios, and small portable electronic devices and recharging of the batteries therein, small portable gasoline-only inverter generators have come into common use. The advantage of using small portable gasoline-only inverter generators is the much lower sound profile, lighter weight, and greater efficiency for generating the small amount of electricity needed to recharge batteries, over the period of time necessary for recharging. Gasoline or petrol for the generator is readily available at retail gasoline refueling stations.

Remote field operations, such as those in areas far away from highways, retail outlets, and the electrical grid, require participants to carry all supplies, especially consumable supplies, which will be needed to complete the operations. Not only is the total amount of supplies often minimized to reduce cost and weight, but the variety of supplies is also minimized, to reduce logistical costs and complexity in transporting materials to, and resupplying, a base camp.

To get to remote field locations, off-road and military tactical vehicles often utilize diesel-type heavy fuels, rather than gasoline or petrol. The supplies carried to such remote field locations typically only include heavy fuel, not gasoline, for the vehicles as is common in the US military with it's one fuel forward policy with a diesel type fuel (JP-8). In these cases, recharging of batteries or batteries within electronic devices is typically carried out using power generated by the vehicle, via idling the vehicle main engine while recharging the batteries or from a large 2-10kW heavy fuel generators towed or delivered on-site by the vehicle or air support. Furthermore, in these remote and austere field locations, the noise generated by the vehicles idling engine or heavy fuel generator can be especially undesirable and often exceeding 70dB, considering the extended period of time needed for recharging batteries or devices. Under these circumstances, the use of heavy fuels and a heavy fuel generator or idling vehicle engine is particularly inefficient for recharging small format batteries, due to the poor match between the power generated and the power required and consumed.

Generators for producing electricity are well known and have been commercially available for many years. These devices typically include an internal combustion engine. They are adapted to provide alternating current (AC) electricity, through a standard two-prong or three-prong plug receiver, at 120 or 240 volts, and at 50 to 60 Hz; also common is an additional 12 volt DC power port for charging lead acid batteries. Devices which use either gasoline-only or heavy fuels only, such as JP-8, diesel fuel, jet fuel or kerosene, are available.

Gasoline and heavy fuel engines are products of distinct and divergent technologies. Gasoline has a low-flashpoint (less than -20 °C) and high autoignition temperature (greater than 200 °C). In operation gasoline requires the proper air to fuel ratio and a spark to induce and maintain ignition. A throttle and/or fuel injector is used to meter the fuel/air mixture which is sucked into the cylinders of the engine during operation. The low flashpoint and volatility of gasoline allows starting of the spark ignition engine at temperatures below freezing, allowing for operation over a broad range of temperatures typically between -20 °C to 55 °C. In order to obtain acceptable efficiency, a compression ratio of 8:1 to 12:1 is desirable for a gasoline-only engine, which is low enough to allow for manual pull-starting of the engine and the construction of simple lightweight portable engine devices made of aluminum. Improving the combustion efficiency of a gasoline engine by increasing the compression ratio further can result in autoignition ("knocking") problems which interfere with operation and durability of the aluminum engine.

Diesel fuel and kerosene (heavy fuels) have both high flashpoints (greater than 35 °C) and low autoignition temperatures (below 200 °C). A diesel engine relies on compression induced autoignition to ignite the air/fuel mixture. Although a compression ratio of 18:1 or 20:1 is necessary to start and sustain reliable compression ignition, the superior combustion efficiency provides cost and power advantages. Furthermore, the high compression ratio requires that the fuel is sprayed into the cylinders with a pump at 70 to 80 psi, atomizing the fuel to form the liquid fuel/air mixture. The compression ignition engine cannot typically be started at low to moderate temperatures without the input of some form of high pressure from a fuel pump or thermal energy from glow plugs or block heaters. The high compression ratio requires stronger engine block materials and a heavy duty battery to start the engine, making small portable devices unrealistic.

Diesel fuel and kerosene cannot be used directly in a gasoline-only engine using a spark ignition. At ambient temperatures a gasoline-only engine would not start if heavy fuels are used. If somehow the engine were started, incomplete combustion of the heavy fuel quickly floods the engine and fouls the lubricant and spark plug. Unwanted autoignition ("knocking") is also observed.

There exists vehicles that can be operated on both gasoline and diesel fuel. An example is the "duce-and-a-half" or M35 cargo truck. In this hypercycle, multi-fuel engine, a very high compression ratio is used: the very high compression ratio allows for efficient autoignition of both gasoline and diesel fuel. The very high compression ratio requires strong engine block materials and a large engine and for the user to add oil to the gasoline in order to maintain lubrication. Accordingly, this approach cannot be used to create a portable generator.

WO 95/26464 describes a back-pack generator having a spark-ignited engine operating on middle distillate fuels.

### SUMMARY

The invention provides a portable flexible fuel generator, having an engine, comprises: (1) a cylinder, and a spark plug in the cylinder, (2) a primary fuel tank, fluidly connected to the cylinder, (3) an air intake path, fluidly connecting atmosphere to the cylinder, (4) a start module, comprising a starting fuel tank holder and a starting fuel line, wherein the starting fuel line is fluidly connected to the air intake path, (5) a coolant path, which provide a flow path for coolant to cool the cylinder, and (6) a thermal controller, along the coolant path. The engine has full cylinder cooling.

Also provided is a method of making a portable flexible fuel generator, comprises modifying a portable gasoline generator. The modifying comprises: adding a starting module comprising a starting fuel tank holder and a starting fuel line, wherein the stating fuel line is fluidly connected to an air intake path of the portable gasoline generator; adding a thermal controller, along the coolant path of the portable gasoline generator; and retarding the spark plug ignition timing.

The portable flexible fuel generator may be made by modifying a portable gasoline generator.

### DEFINITIONS

Heavy fuels include diesel fuel, diesel 1, diesel 2, kerosene, JP-8, JP-5, F-76, DF2 aviation fuel and bio-diesel. Heavy fuels or gasoline are occasional mixed with a substantial amount of lubricant, such as oil, to form a fuel-lubricant mixture for use in two-stroke engine which do not contain a lubricant. Preferably, Heavy fuels or gasoline is not present as such fuel-lubricant mixtures.

Diesel fuel includes diesel 1, diesel 2, JP-8, JP-5, F-76, DF2 aviation fuel and bio-diesel. Diesel fuel does not include kerosene.

Gaseous low-flashpoint fuels include hydrogen, syn gas, propane and butane.

Low-boiling point low-flashpoint fuels include diethyl ether and gasoline. These fuels have a boiling point of 15-50 °C, and a flashpoint below 0 °C.

Fuels include heavy fuels with high flash point and low autoignition temperatures, gaseous low-flashpoint fuels, low-boiling point low-flashpoint fuels and other high flash point and high autoignition fuels such as methanol, ethanol and isopropanol. Fuels may contain additives, for example to improve combustion or reduce emissions.

A "portable gasoline generator" is a generator that has an internal combustion engine and includes a pull start and uses a spark to ignite fuel in the engine, and preferably does not include a battery for starting the engine. The compression ratio used in the engine is greater than 8.0:1, and more preferably 8.1:1 to 12.0:1. Preferably, the engine is air-cooled, has an aluminum cylinder or cylinders, and uses fixed spark plug ignition timing. Preferably, the engine is a 4 cycle, 50 cc engine. Examples of a portable gasoline generator include the YAMAHA Inverter EF1000iS and the HONDA EU1000i.

The term "isothermal" or "isothermally" in the context of the operation of an engine means that the temperature of the cylinder(s) is maintained substantially uniform within a desired temperature range, irrespective of engine RPM or ambient external temperature.

A "step-down gas regulator" is a gas regulator that delivers gas at a pressure of 0.5 to 1 psi, only supplies the gas under suction. Examples of such regulators are sold under the brand name "GARRETSON".

The term "engine" means the internal combustion engine of a generator, which includes at least a cylinder, a piston which moves inside the cylinder, a spark plug, a fuel-air inlet to the cylinder, an exhaust outlet from the cylinder, and a drive shaft which moves with the piston. Preferably the engine also contains a lubricant.

The term "running fuel" means a fuel used to run an engine, while the term "starting fuel" means a fuel used to start an engine.

### BRIEF DESCRIPTION OF THE DRAWINGS

Figures 1 and 2 illustrate a flexible fuel generator.
Figure 3 illustrates a start module.
Figure 4 illustrates starting fuel enclosure.
Figures 5 and 6 illustrate the interior of a start module, with and without a starting fuel tank, respectively.
Figures 7 and 8 illustrate two configuration of the rear of a flexible fuel generator, providing details of the thermal controller.
Figure 9 is an exploded view of a flexible fuel generator.
Figure 10 illustrates a portion of the exploded view of the flexible fuel generator shown in Figure 9.

### DETAILED DESCRIPTION

In order to develop a small portable generator which could be operated on heavy fuels, preferably JP-8, it was necessary to investigate in detail the sources of the problems which result from using heavy fuel in a portable gasoline generator: (1) problems starting the engine; (2) fouling of the lubricating oil; and (3) engine knocking. The following were discovered during this investigation.

Problems starting the engine were discovered to result from the low volatility and low flashpoint of heavy fuels compared to gasoline. Although gasoline is a mixture of various hydrocarbons and other flammable liquids (such as ethanol) and additives, and its composition is varied depending on the local weather conditions (such as summer and winter formulations), it typically has an initial boiling point of about 40 °C and a flashpoint of about -40 °C. In contrast, heavy fuel, such as JP-8, has a boiling point above 150 °C and a flashpoint of about 40 °C. When entering the cylinder of the engine, the gasoline-air mixture will include a large amount of gasoline vapor. The spark from the spark plug ignites this vapor, and the flame front travels through the cylinder to quickly burn all the gasoline. Because of the low flashpoint of heavy fuel, the spark from the spark plug fails to ignite the fuel-air mixture. Even when the heavy fuel is introduced in the engine pre-warmed above the flashpoint of the heavy fuel, the low volatility of the heavy fuel means that most of the heavy fuel is present as large droplets, which incompletely burn or dissolve into the engine oil.

This incompletely burned heavy fuel collects in the engine. The heavy fuel then begins to mix with the lubricant, which quickly accumulates in the crank case. The low volatility of the heavy fuel, exacerbated by the very low volatility of the lubricant, prevents the heavy fuel from fully evaporating. The engine will then begin to smoke and may seize-up due to cylinder flooding.

Knocking is caused by autoignition of the heavy fuels within parts of the cylinder. After ignition by the spark, the burning fuel creates a shock wave which travels through the cylinder and moves the piston downward. The expanding shock wave moves faster than the flame front of the burning fuel. Furthermore, some parts of the cylinder, particularly at the exhaust exit, tend to be much hotter than other parts of the cylinder. When the shock wave reaches the rapidly heating end gas ahead of the flame front, the heavy fuel ignites by autoignition from the increased pressure of the shock wave and the ever-increasing temperature of the end gas, causing destructive engine knocking.

The present invention is based on a variety of discoveries, to address these problems. Together, they allow heavy fuels, in particular diesel fuels such as JP-8 fuel, to be used in a modified gasoline generator, creating a portable flexible fuel generator. The portable flexible fuel generator incorporates the following features: (1) A start module which delivers a small amount of a low-boiling point low-flashpoint fuel to the carburetor via the air intake, for starting the engine; (2) a thermal controller, which adjusts the cooling of the engine so that it operates at a range of 120-180 °C; and (3) full cylinder air cooling, which cools the entire cylinder, so that the temperature of the cylinder(s) is maintained substantially uniform, without hot spot.

It has been discovered that a small amount of a low-boiling point low-flashpoint fuel supplied to the air intake of the generator, will allow starting of the engine with heavy fuels. A small amount of the low-boiling point low-flashpoint fuel, from 0.1 to 10.0 grams, delivered anywhere along the air intake path, will evaporate at an appropriate rate to allow starting and continued operation of the engine with liquid heavy fuel. By the time the low-boiling point low-flashpoint fuel has evaporated and been consumed, the engine has reached an operating temperature sufficient to sustain the combustion of the heavy fuel and to provide the heat necessary to quickly bring the engine to the isothermal range of 120-180°C and the engine will then continue running using heavy fuel.

It has also been discovered that a spark ignition engine will not accumulate incompletely burned diesel fuel when operated at an isothermal range of 120-180 °C. The generator engine of the present application is designed to operate in a "sweet spot" -- an engine operating temperature of 120-180 °C -- where heavy fuels, such as JP-8 fuel, behave like gasoline. Within this temperature window JP-8 fuel does not autoignite even at a compression ratio of greater than 8:1, but does burn efficiently when ignited by a spark from a spark plug. The temperature of 120-180 °C of the fuel when it enters the cylinder(s) of the engine ensures sufficient volatility to eliminate liquid fuel accumulation, preventing flooding of the engine and fouling of the lubricant. By redesigning the classic small gasoline powered portable engine to run within this temperature window, the generator engine may operate on gasoline, heavy fuel, and other fuels and mixtures.

It has also been discovered that isothermal operation of an engine, so that the temperature of the cylinder(s) is maintained substantially uniform, without hot spot, prevents knocking. It was believed that operating a generator at higher temperatures would increase knocking, because the pressure needed to induce autoignition is reduced at higher temperatures. However, it was discovered that hot spots, which are at a temperature greater than 180 °C, are the true causes of autoignition, and therefore more uniform cooling of the cylinder, especially at the exhaust valve and piston head, reduces the unwanted autoignition of the heavy fuel. This may be carried out by cooling the cylinder at the fuel entrance and/or at the exhaust exit.

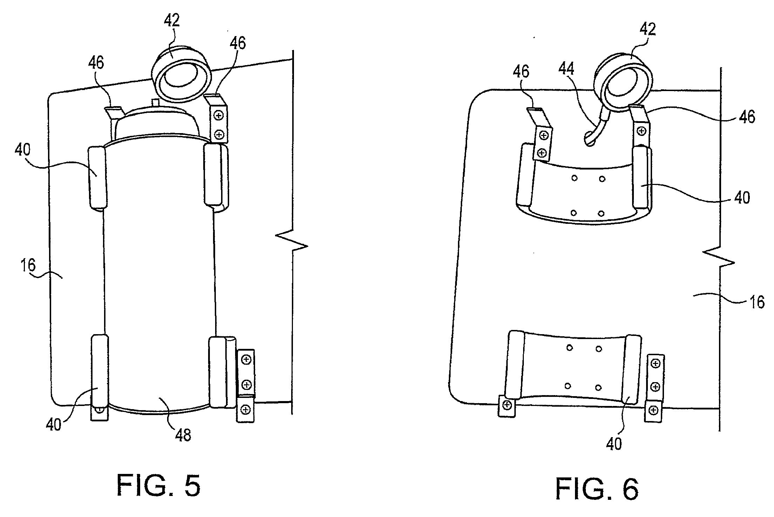

The start module includes a starting fuel tank holder and starting fuel line, for fluidly connecting a starting fuel tank to the air intake path. The air intake path fluidly connects the atmosphere outside the generator to the engine, to supply air for combustion of the fuel. Preferably, the start module includes: a starting fuel tank containing low-boiling point low-flashpoint fuel, preferably pressurized, such as a spray can of pressurized diethyl ether commonly available as starting fluid; a starting fuel dispenser, for dispensing the low-boiling point low-flashpoint fuel, such as a spray cap or small mechanical liquid pump; a starting fuel enclosure, having a starting fuel button access for accessing the starting fuel dispenser, a starting fuel button cover to prevent accidental dispensing of the low-boiling point low-flashpoint fuel, enclosure bolt holes for attaching the starting fuel enclosure over the starting fuel tank. When present, the enclosure may be attached to the maintenance panel by bolts. Preferably, the starting fuel tank holder is attached to the generator housing, such as onto the maintenance panel. The starting fuel tank holder may be clips (as illustrated in Figure 6), an adhesive strip or a strap.

The air intake path is the path along which air enters the generator housing and travels to the carburetor, when the fuel-air mixture is formed and then delivered to the cylinder. Preferably, the generator includes an air filter along the air intake path. The starting fuel line, which may be a simple plastic tube resistant to damage or chemical reaction from the low-boiling point low-flashpoint fuel, preferably delivers the low-boiling point low-flashpoint fuel as a mist to the air exit side (back) of the air filter, or to some other point between the air filter and the carburetor.

The low-boiling point low-flashpoint fuel is preferably diethyl ether, such as starting fluid. Preferably, the low-boiling point low-flashpoint fuel is present in a starting fuel tank, more preferably as a pressurized fluid. Diethyl ether, particularly in the form of starting fluid is especially preferred (for example, VALVOLINE® Extra Strength Starting Fluid with cylinder lubricant), because it is conveniently supplied in pressurized cans of a convenient size; a simple press of the can top for a few seconds will dispense the desired amount of starting fluid mist. Gasoline may also be used, but it is less preferred because the composition and flash point are variable.

An amount of 0.1 to 10.0 grams, more preferably 0.3 to 3.0 grams, including 1.0, 1.5, 2.0 and 2.5 grams, of the low-boiling point low-flashpoint fuel is sufficient to start the engine and sustain the combustion of the heavy fuel. Because the low-boiling point low-flashpoint fuel is provided along the air intake path it will enter the engine as a vapor. The engine will start and run on a combination of any liquid fuel from the primary fuel tank and fuel vapor from the air intake path. As the low-boiling point low-flashpoint fuel evaporates, it will allow the generator to rapidly transition automatically to solely the liquid fuel from the primary fuel tank.

Any heavy fuel, gasoline, or alcohol and mixtures may be used as the liquid fuel from the primary fuel tank. In a variation, the fuel is diesel fuel. Preferably, the heavy fuel is JP-8. It may be desirable to adjust the size of the jet in the generator to compensate for the viscosity of the liquid fuel and the anticipated temperature of the liquid fuel in the primary fuel tank. It may be desirable to retard the spark plug ignition timing, as compared to a gasoline engine, because of the faster flame speed of heavy fuel. The primary fuel tank is fluidly connected to the engine, and delivers liquid fuel to the carburetor.

A thermal controller adjusts the flow of the coolant through the generator. Preferably, the coolant is air. For example, an air fan may pull air through the generator and over the outside of the cylinder, to cool the cylinder, and then out a cooling air outlet. In this configuration, the thermal controller may be a movable sheet of metal or plastic (a thermal door) which can interrupt the amount of the flow of air, at any point along the cooling air path. The thermal controller may be moved to increase or decrease the size of the cooling air outlet. In an alternative configuration, baffles may be use to increase or decrease the size of the cooling air outlet or inlet, or along the cooling air path. In another alternative configuration, the thermal controller may be a fan or pump coupled to a temperature sensor or thermostat, which increases or decreases the coolant flow to maintain the temperature within the desired temperature range.

The thermal controller, such as a thermal door, is used to maintain the temperature of the cylinder at 120-180 °C, preferably 130-175 °C, more preferably 150-170 °C, for example 155-165° C. If the temperature is too low, or too high, the thermal controller can be used to increase or decrease the flow of coolant. The temperature of the generator is preferably the temperature of the cylinder, which may be conveniently measure at the spark plug using a thermocouple temperature sensor (for example, a spark plug temperature sensor available from TRAIL TECH).

In a generator with full cylinder cooling, the isothermal operation of the engine may be maintained. Preferably, the cylinder comprises aluminum (that is, the engine block comprises aluminum), which keeps the generator low in weight, and because of the high thermal conductivity of aluminum, maintains isothermal operation of the engine. Preferably, full cylinder cooling comprises cooling the cylinder at the fuel entrance and/or at the exhaust exit.

Determining if an engine is operating in the isothermal range of 120-180 °C and has full cylinder cooling, may be carried out as follows. The temperature of the engine is measured at the spark plug where it is screwed into the engine block, for example by a thermocouple attached to a washer. The engine is then operated on JP-8 fuel. If the engine does not knock over a period of at least 5 minutes, and the temperature of the engine is maintained at 120-180 °C during that period, then during that time period the engine is operating isothermally at 120-180 °C. Furthermore, such operation over the 5 minute period confirms that the engine has full cylinder cooling. In the case of an engine with multiple cylinders, if the temperature at each spark plug must be maintained at 120-180 °C during the 5 minute period, and knocking does not occur, then during that time period the engine is operating isothermally at 120-180 °C; furthermore, such operation over the 5 minute period confirms that the engine has full cylinder cooling. An example of full cylinder cooling is the YAMAHA Inverter EF1000iS, which allows air to cool the cylinder at the fuel entrance and/or at the exhaust exit.

Preferably, the cylinder has a compression ratio greater than 8.0:1, for example 8.1:1 to 12:1 or 10:1, including 8.2:1, 8.3:1, 8.4:1, 8.5:1, 8.6:1, 8.7:1, 8.8:1, 8.9:1, 9.0:1 and 9.5:1. Preferably, the engine is air-cooled, has an aluminum block and uses fixed timing. Preferably, the engine is a 4 cycle, 50 cc engine.

The flexible fuel generator of the present application may be prepared by modifying a portable gasoline generator, such as a YAMAHA Inverter EF1000iS, which is air-cooled, has an aluminum block, uses fixed timing, and is a 4 cycle, 50 cc engine, having a compression ratio of 8.2:1. The figures illustrate such a flexible fuel generator. As illustrated, a start module is added, which deliver the low-boiling point low-flashpoint fuel, such as diethyl ether, to the back of the air filter. A thermal controller is added to the rear of the generator. A temperature display is added, which displays the temperature at the spark plug. The fixed spark plug ignition timing is retarded, by moving the spark ignition coil clockwise from its original position. When a starting fuel tank with starting fuel dispenser is also present, and a heavy fuel such as JP-8 fuel is present in the primary fuel tank, the generator may be started by first depressing the dispenser for 1 to 3 second. The pull start is then used to start the generator, with the thermal door blocking most of the cooling air outlet. Once the temperature at the temperature display reaches 120-180 °C, the thermal door may be adjust to maintain that temperature. The design of the generator does not require modification for isothermal operation, as the generator has full cylinder cooling. A single can of VALVOLINE® Extra Strength Starting Fluid with cylinder lubricant contains sufficient diethyl ether to start the generator about 100 times. It may be desirable to use higher quality oil that resists thermal breakdown, such as AMSOIL® SAE 10W-40 synthetic motor oil as the lubricant, or change the lubricant more often, due to the high temperature operation of the engine. In addition it may be desirable to perform an engine flush treatment to remove carbon deposits from the heavy fuels.

In the case of such a modified portable gasoline generator, which has also been modified to receive a gaseous low-flashpoint fuel directly into the carburetor using a step-down regulator, it is possible to start the generator using only the gaseous low-flashpoint fuel. Once the temperature of 120-180 °C is reached, it is possible to switch the fuel supply to a heavy fuel, such as diesel fuel, from the primary fuel tank, which is using the gaseous low-flashpoint fuel as the starting fuel and using the heavy fuel as the running fuel. However, a much larger amount of gaseous low-flashpoint fuel is needed as compared to low-boiling point low-flashpoint fuel to sustain combustion, and the switch-over to the primary fuel tank must be carried out by the user.

Examples of portable flexible fuel generators of the present application are illustrated in the figures. The generator of the present invention includes an internal combustion engine containing a spark plug, a start module, full cylinder cooling and a thermal controller. Other parts are optional.

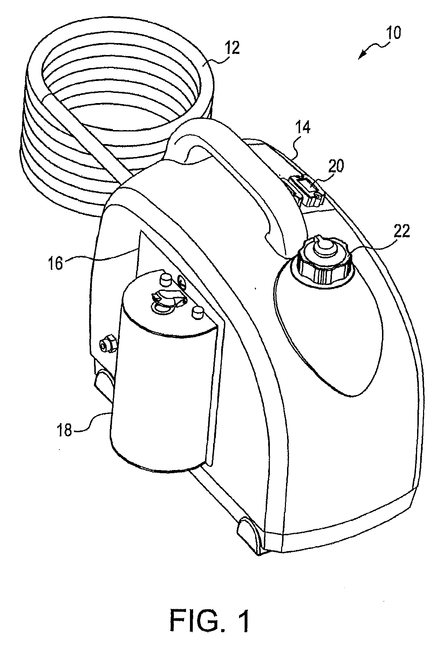

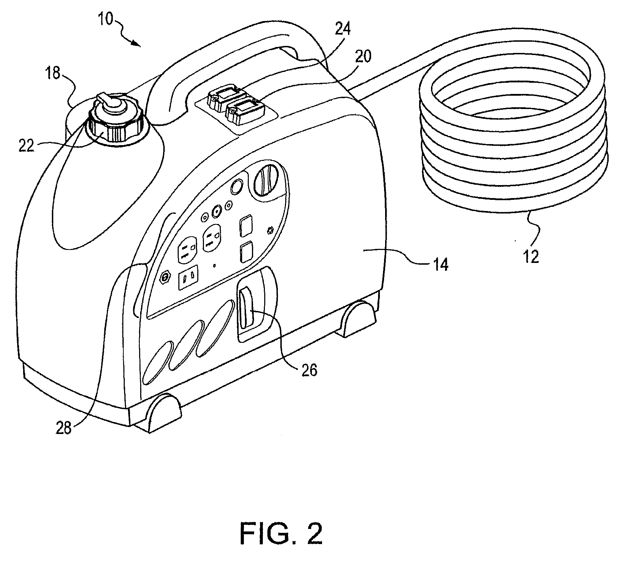

Figures 1 and 2 illustrate a flexible fuel generator, **10.** The generator includes a generator housing, **14,** which encloses the generator engine (not shown). Exhaust from the generator engine exits through an exhaust outlet (not shown) and then through an exhaust hose, **12,** attached to the exhaust outlet. The generator housing includes a maintenance panel, **16,** and a fueling port, **22.** Attached to the maintenance door is a start module, **18.** A temperature display, **20,** on the generator housing displays the internal temperature of the generator engine. An auxiliary display, **24,** displays other information, such as the length of time the generator has been operating. A pull start, **26,** for manually starting the engine, passes through the generator housing. A control panel, **28,** is present on the generator housing, and includes electrical plug receivers, start and stop buttons, and other controls for controlling the operation of the generator.

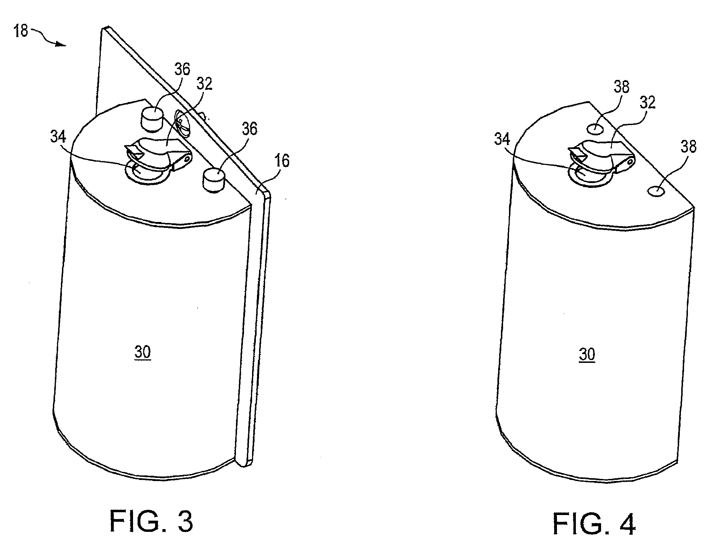

Figure 3 illustrates a start module, **18.** The start module is attached to the maintenance panel, **16.** The start module includes a starting fuel enclosure, **30,** which has a starting fuel button cover, **32,** and a starting fuel button access, **34.** Also illustrated are enclosure bolts, **36** and **36,** which are used to attach the starting fuel enclosure to the maintenance panel. Figure 4 illustrates starting fuel enclosure, **30.** The starting fuel enclosure, **30,** has a starting fuel button cover, **32,** and a starting fuel button access, **34.** Also illustrated are enclosure bolt holes, **38** and **38,** for the enclosure bolts.

Figures 5 and 6 illustrate a start module with the starting fuel enclosure removed, with and without a starting fuel tank, respectively. Shown is the maintenance panel, **16.** Attached to the panel are starting fuel tank holders, **40** and **40,** for holding a starting fuel tank, **48.** A starting fuel dispenser, **42,** may be attached to the starting fuel tank, to dispense starting fuel. A starting fuel line, **44,** attached to the starting fuel dispenser and passing through the maintenance panel, transports starting fuel to the air intake path of the generator. Also shown are enclosure bolt tabs, **46** and **46,** attached to the maintenance panel, for receiving the enclosure bolts for attaching the starting fuel enclosure to the maintenance panel of the generator housing.

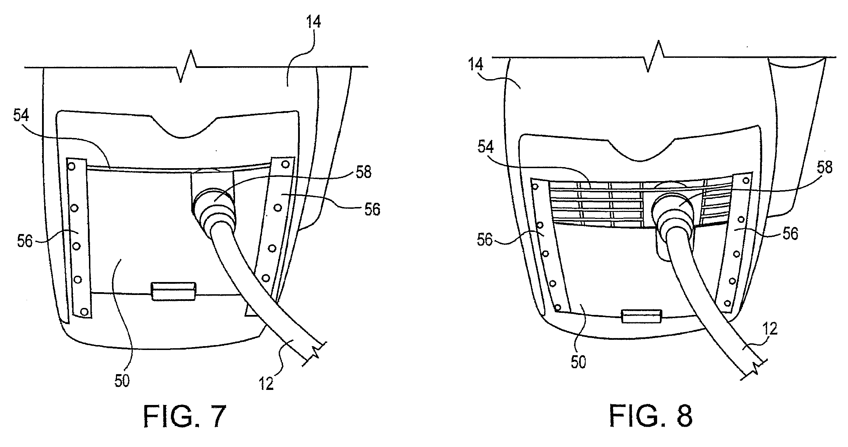

Figures 7 and 8 illustrate two configuration of the rear of a flexible fuel generator, providing details of the thermal door. Shown in these figures are the generator housing, **14,** the exhaust port, **58,** to which is attached the exhaust hose, **12.** The thermal door, **50,** is slideably attached to the rear of the generator housing by clasps, **56** and **56,** over the cooling air outlet, **54.** In Figure 7, the thermal door almost completely blocks the cooling air outlet, while in Figure 8, the thermal door blocks only a small portion of the cooling air outlet.

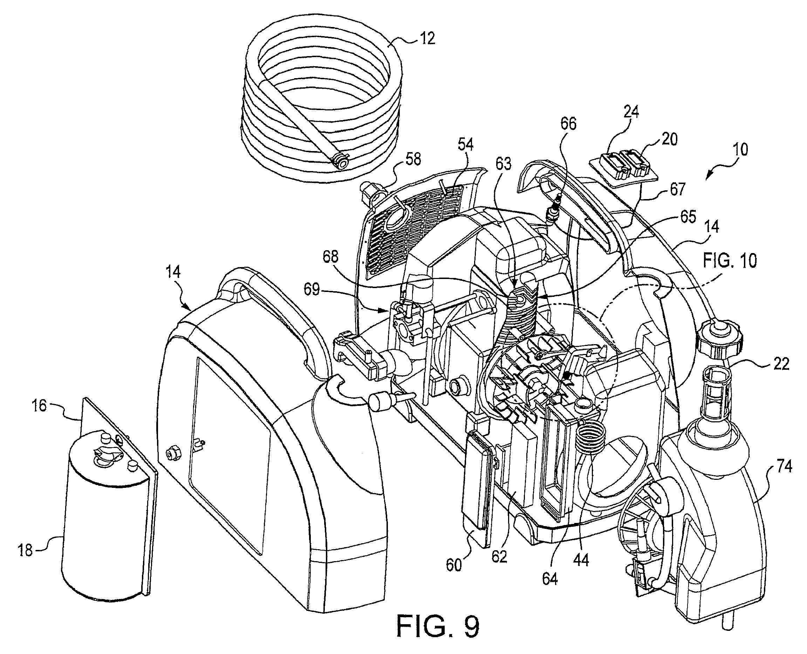

Figure 9 is an exploded view of a flexible fuel generator. Here, the generator housing, **14** has been split apart to show otherwise hidden elements. The air filter housing includes a front panel, **60** and a rear panel, **64,** and the air filter, **62,** is between these two panels; these elements are part of the air intake path. Air enters the generator and is pulled through a lower portion of the rear panel to a lower portion of the front panel, and then up along the front panel and through the air filter, and finally out the back of the upper portion of the rear panel. Also shown in the figure is starting fuel line, **44,** which has an exit end delivering starting fuel to the back of the air filter (that is, the side of the air filter facing the rear panel). Although not illustrated in Figure 9, the entrance end of the starting fuel line is attached to starting fuel dispenser, forming a fluid connection between the starting fuel tank and the air intake path. By activation of the starting fuel dispenser, for example by pressing the top of the starting fuel dispenser, starting fuel is dispensed onto the back of the air filter. Coolant (in this device, air) flows over the cylinder, **68,** including portion of the cylinder at the fuel entrance, **63,** and at the exhaust exit, **65.** Also illustrated in Figure 9 are the spark plug, **66,** the temperature sensor, **67** (which measure the temperature at the spark plug and is connected to the temperature display), the carburetor, **69,** and the primary fuel **tank, 74.**

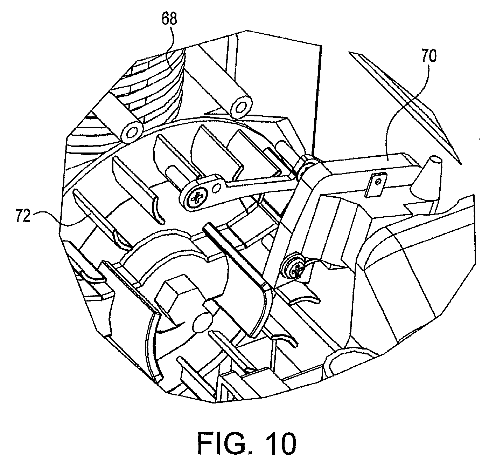

Figure 10 illustrates details of a portion of the exploded view of the flexible fuel generator shown in Figure 9. Shown are the cylinder, **68,** the air fan, **72,** and the spark ignition coil, **70.** The position of the spark ignition coil controls the timing of the spark plug, because it is couple to movement of the drive shaft by magnets on the air fan (which is connected to the drive shaft); as the air fan rotates, the magnets actuate the spark ignition coil. Since the spark ignition coil is electrically connected to the spark plug, when the spark ignition coil is actuated, a spark is produced by the spark plug in the cylinder. Furthermore, the air fan pulls air through the generator and over the outside of the cylinder, to cool the cylinder, and then out the cooling air outlet. As is more clearly illustrated in Figure 9, the outside of the cylinder includes cooling fins along the full length of the exterior, so that the cylinder is cooled at both the top and the bottom and therefore has full cylinder cooling.

### EXAMPLE

A YAMAHA Inverter EF1000iS was modified to include a start module and thermal controller (a thermal door), as illustrated in the figures. Furthermore, a larger carburetor jet was used and the spark plug ignition timing was retarded.

## Claims

1. A portable flexible fuel generator (10), having an engine, comprising:
(1) a cylinder (68), and a spark plug (66) in the cylinder,
(2) a primary fuel tank (74), fluidly connected to the cylinder,
(3) an air intake path, fluidly connecting atmosphere to the cylinder,
(4) a start module (18), comprising a starting fuel tank holder (40) and a starting fuel line (44), wherein the starting fuel line is fluidly connected to the air intake path,
(5) a coolant path, which provides a flow path for coolant to cool the cylinder, and
(6) a thermal controller (50) arranged to control the flow of coolant, along the coolant path,
wherein the engine has full cylinder cooling.

2. The portable flexible fuel generator of claim 1, wherein the generator does not include a battery.

3. The portable flexible fuel generator of any of the preceding claims,
wherein the cylinder comprises aluminum.

4. The portable flexible fuel generator of any of the preceding claims, further comprising a starting fuel tank (48), fluidly connected to the starting fuel line.

5. The portable flexible fuel generator of any of the preceding claims,
wherein the start module further comprises a starting fuel enclosure (30), comprising a starting fuel button access (34) and starting fuel button cover (32).

6. The portable flexible fuel generator of any of the preceding claims,
wherein the starting fuel tank contains a low-boiling point low-flashpoint fuel comprising diethyl ether.

7. The portable flexible fuel generator of claim 6, wherein the low-boiling point low-flashpoint fuel in the starting fuel tank is pressurized.

8. The portable flexible fuel generator of any of the preceding claims, wherein an air filter (62) is present along the air intake path, and
the starting fuel line is connected to the air intake path between the air filter and the cylinder.

9. The portable flexible fuel generator of any of the preceding claims, wherein:
the coolant path has an entrance for air to enter the generator and an exit for air to exit the generator,
the thermal controller is a thermal door (50), and
the thermal door is at the exit of the coolant path.

10. The portable flexible fuel generator of any of the preceding claims,
wherein the primary fuel tank contains fuel, and the fuel comprises a heavy fuel or diesel fuel.

11. The portable flexible fuel generator of any of the preceding claims, further comprising a generator housing (14) enclosing the cylinder, wherein the start module is attached to the generator housing, and
wherein the generator is air-cooled,
the cylinder comprises aluminum,
the generator does not include a battery,
the start module further comprises a starting fuel enclosure,
an air filter is present along the air intake path,
the starting fuel line is connected to the air intake path between the air filter and the cylinder,
the coolant path has an entrance for air to enter the generator and an exit for air to exit the generator,
the thermal controller is a thermal door, and
the thermal door is at the exit of the coolant path.

12. The portable flexible fuel generator of any of the preceding claims, further comprising a starting fuel tank, fluidly connected to the starting fuel line, and contains a low-boiling point low-flashpoint fuel,
wherein the low-boiling point low-flashpoint fuel is diethyl ether,
the low-boiling point low-flashpoint fuel in the starting fuel tank is pressurized, and
the primary fuel tank contains fuel, and the fuel comprises diesel fuel.

13. A method of operating the portable flexible fuel generator of any of the preceding claims, comprising:
operating the engine in the isothermal range of 120-180°C, and
fueling the engine with a running fuel comprising a heavy fuel.

14. A method of making a portable flexible fuel generator (10), comprising modifying a portable gasoline generator,
wherein the modifying comprises:
adding a start module(18) comprising a starting fuel tank holder (40) and a starting fuel line (44), wherein the starting fuel line is fluidly connected to an air intake path of the portable gasoline generator,
adding a thermal door (50), along the coolant path of the portable gasoline generator, and
retarding the spark plug (66) ignition timing.

15. The method of claim 14, wherein:
the portable gasoline generator comprises:
a generator housing (14),
an air filter (62) along an air intake path which supplied air for combustion of fuel, and
a coolant path having an entrance for air to enter the generator and an exit for air to exit the generator,
wherein the start module (18) is attached to the generator housing,
the start module further comprises a starting fuel enclosure (30), the starting fuel enclosure comprises a starting fuel button access (34) and starting fuel button cover (32),
the starting fuel line (44) is connected to the air intake path between the air filter and the cylinder (68), and
the thermal door (50) is at the exit of the coolant path.

## Patentansprüche

1. Tragbarer flexibler Brennstoffgenerator (10), der einen Motor aufweist, der Folgendes umfasst:
(1) einen Zylinder (68) und eine Zündkerze (66) in dem Zylinder,
(2) einen primären Brennstofftank (74), der fluidmäßig mit dem Zylinder verbunden ist,
(3) eine Lufteinlasspfad, der die Atmosphäre fluidmäßig mit dem Zylinder verbindet,
(4) ein Startmodul (18), das einen Startbrennstofftankhalter (40) und eine Startbrennstoffleitung (44) umfasst, wobei die Startbrennstoffleitung fluidmäßig mit dem Lufteinlasspfad verbunden ist,
(5) einen Kühlmittelpfad, der einen Strömungspfad für Kühlmittel zum Kühlen des Zylinders bereitstellt, und
(6) einen Thermoregler (50), der dafür angeordnet ist, die Strömung des Kühlmittels entlang des Kühlmittelpfads zu steuern,
wobei der Motor über eine vollständige Zylinderkühlung verfügt.

2. Tragbarer flexibler Brennstoffgenerator nach Anspruch 1, wobei der Generator keine Batterie umfasst.

3. Tragbarer flexibler Brennstoffgenerator nach einem der vorhergehenden Ansprüche, wobei der Zylinder aus Aluminium besteht.

4. Tragbarer flexibler Brennstoffgenerator nach einem der vorhergehenden Ansprüche, der ferner einen Startbrennstofftank (48) umfasst, der fluidmäßig mit der Startbrennstoffleitung verbunden ist.

5. Tragbarer flexibler Brennstoffgenerator nach einem der vorhergehenden Ansprüche, wobei das Startmodul ferner ein Startbrennstoffgehäuse (30) umfasst, das einen Startbrennstofftastenzugriff (34) und eine Startbrennstofftastenabdeckung (32) umfasst.

6. Tragbarer flexibler Brennstoffgenerator nach einem der vorhergehenden Ansprüche, wobei der Startbrennstofftank einen Brennstoff mit niedrigem Siedepunkt und niedrigem Flammpunkt enthält, der Diethylether umfasst.

7. Tragbarer flexibler Brennstoffgenerator nach Anspruch 6, wobei der Brennstoff mit niedrigem Siedepunkt und niedrigem Flammpunkt in dem Startbrennstofftank unter Druck steht.

8. Tragbarer flexibler Brennstoffgenerator nach einem der vorhergehenden Ansprüche, wobei entlang dem Lufteinlasspfad ein Luftfilter (62) vorhanden ist und
die Startbrennstoffleitung zwischen dem Luftfilter und dem Zylinder mit dem Lufteinlasspfad verbunden ist.

9. Tragbarer flexibler Brennstoffgenerator nach einem der vorhergehenden Ansprüche, wobei:
der Kühlmittelpfad Folgendes aufweist: einen Eingang, durch den Luft in den Generator eintreten kann, und einen Ausgang, durch den Luft aus dem Generator austreten kann,
der Thermoregler eine thermische Tür (50) ist und
sich die thermische Tür am Ausgang des Kühlmittelpfades befindet.

10. Tragbarer flexibler Brennstoffgenerator nach einem der vorhergehenden Ansprüche, wobei der primäre Brennstofftank Brennstoff enthält und der Brennstoff einen Schweröl oder einen Dieselbrennstoff umfasst.

11. Tragbarer flexibler Brennstoffgenerator nach einem der vorhergehenden Ansprüche, der ferner ein Generatorgehäuse (14) umfasst, das den Zylinder umschließt, wobei das Startmodul an dem Generatorgehäuse angebracht ist und
wobei der Generator luftgekühlt ist,
der Zylinder aus Aluminium besteht,
der Generator keine Batterie umfasst,
das Startmodul ferner ein Startbrennstoffgehäuse umfasst,
ein Luftfilter entlang dem Lufteinlasspfad vorhanden ist,
die Startbrennstoffleitung zwischen dem Luftfilter und dem Zylinder mit dem Lufteinlasspfad verbunden ist,
der Kühlmittelpfad Folgendes aufweist: einen Eingang, durch den Luft in den Generator eintreten kann, und einen Ausgang, durch den Luft aus dem Generator austreten kann,
der Thermoregler eine thermische Tür ist und
sich die thermische Tür am Ausgang des Kühlmittelpfades befindet.

12. Tragbarer flexibler Brennstoffgenerator nach einem der vorhergehenden Ansprüche, der ferner einen Startbrennstofftank umfasst, der fluidmäßig mit der Startbrennstoffleitung verbunden ist und einen Brennstoff mit niedrigem Siedepunkt und niedrigem Flammpunkt enthält,
wobei der Brennstoff mit niedrigem Siedepunkt und niedrigem Flammpunkt Diethylether ist,
wobei der Brennstoff mit niedrigem Siedepunkt und niedrigem Flammpunkt in dem Startbrennstofftank unter Druck steht und
der primäre Brennstofftank Brennstoff enthält und der Brennstoff Dieselbrennstoff umfasst.

13. Verfahren zum Betreiben des tragbaren flexiblen Brennstoffgenerators nach einem der vorhergehenden Ansprüche, das Folgendes umfasst:
Betreiben des Motors im isothermen Bereich von 120 bis 180 °C und
Versorgen des Motors mit einem laufenden Brennstoff, der ein Schweröl umfasst.

14. Verfahren zur Herstellung eines tragbaren flexiblen Brennstoffgenerators (10), das das Modifizieren eines tragbaren Benzingenerators umfasst,
wobei das Modifizieren Folgendes umfasst:
Hinzufügen eines Startmoduls (18), das einen Startbrennstofftankhalter (40) und eine Startbrennstoffleitung (44) umfasst, wobei die Startbrennstoffleitung fluidmäßig mit einem Lufteinlasspfad des tragbaren Benzingenerators verbunden ist,
Hinzufügen einer thermischen Tür (50) entlang dem Kühlmittelpfad des tragbaren Benzingenerators und
Verzögern des Zündzeitpunkts der Zündkerze (66).

15. Verfahren nach Anspruch 14, wobei:
der tragbare Benzingenerator Folgendes umfasst:
ein Generatorgehäuse (14),
ein Luftfilter (62) entlang eines Lufteinlasspfads, der Luft zur Verbrennung des Brennstoffes zuführt, und
einen Kühlmittelpfad, der Folgendes aufweist: einen Eingang, durch den Luft in den Generator eintreten kann, und einen Ausgang, durch den Luft aus dem Generator austreten kann,
wobei das Startmodul (18) an dem Generatorgehäuse angebracht ist,
das Startmodul ferner ein Startbrennstoffgehäuse (30) umfasst, wobei das Startbrennstoffgehäuse einen Startbrennstofftastenzugriff (34) und eine Startbrennstofftastenabdeckung (32) umfasst,
die Startbrennstoffleitung (44) zwischen dem Luftfilter und dem Zylinder (68) mit dem Lufteinlasspfad verbunden ist und
sich die thermische Tür (50) am Ausgang des Kühlmittelpfades befindet.

## Revendications

1. Génératrice à carburant portative souple (10), comportant un moteur, comprenant :
(1) un cylindre (68), et une bougie d'allumage (66) dans le cylindre,
(2) un réservoir de carburant principal (74), connecté fluidiquement au cylindre,
(3) un passage d'admission d'air, reliant fluidiquement l'atmosphère et le cylindre,
(4) un module de démarrage (18), comprenant un support de réservoir de carburant de démarrage (40) et une conduite de carburant de démarrage (44), dans laquelle la conduite de carburant de démarrage est connectée fluidiquement au passage d'admission d'air,
(5) un passage de réfrigérant, lequel constitue un passage d'écoulement du réfrigérant pour refroidir le cylindre, et
(6) un régulateur thermique (50) agencé pour réguler l'écoulement de réfrigérant, le long du passage de réfrigérant,
dans lequel le moteur comporte un refroidissement de cylindre complet.

2. Génératrice à carburant portative souple selon la revendication 1, la génératrice ne comportant pas de batterie.

3. Génératrice à carburant portative souple selon l'une quelconque des revendications précédentes, dans laquelle le cylindre comprend de l'aluminium

4. Génératrice à carburant portative souple selon l'une quelconque des revendications précédentes, comprenant en outre un réservoir de carburant de démarrage (48), connecté fluidiquement à la conduite de carburant de démarrage.

5. Génératrice à carburant portative souple selon l'une quelconque des revendications précédentes, dans laquelle le module de démarrage comprend en outre une enceinte de carburant de démarrage (30), comprenant un accès à un bouton de carburant de démarrage (34) et un couvercle de bouton de carburant de démarrage (32).

6. Génératrice à carburant portative souple selon l'une quelconque des revendications précédentes, dans laquelle le réservoir de carburant de démarrage contient un carburant à faible point d'ébullition et faible point d'éclair comprenant de l'éther diéthylique.

7. Génératrice à carburant portative souple selon la revendication 6, dans laquelle le carburant à faible point d'ébullition et faible point d'éclair est pressurisé.

8. Génératrice à carburant portative souple selon l'une quelconque des revendications précédentes, dans laquelle un filtre à air (62) est présent le long du passage d'admission d'air, et
la conduite de carburant de démarrage est connectée au passage d'admission d'air entre le filtre à air et le cylindre.

9. Génératrice à carburant portative souple selon l'une quelconque des revendications précédentes, dans laquelle :
le passage de réfrigérant comporte une entrée permettant à l'air d'entrer dans la génératrice et une sortie permettant à l'air de sortir de la génératrice,
le régulateur thermique est une porte thermique (50), et
la porte thermique se trouve à la sortie du passage de réfrigérant.

10. Génératrice à carburant portative souple selon l'une quelconque des revendications précédentes, dans laquelle le réservoir de carburant principal contient un carburant, et le carburant comprend un carburant lourd ou un carburant diesel.

11. Génératrice à carburant portative souple selon l'une quelconque des revendications précédentes, comprenant en outre un logement de génératrice (14) enfermant le cylindre, dans laquelle le module de démarrage est attaché au logement de génératrice, et
dans laquelle la génératrice est refroidie à l'air,
le cylindre comprend de l'aluminium,
la génératrice ne comporte pas de batterie,
le module de démarrage comprend en outre une enceinte de carburant de démarrage,
un filtre à air est présent dans le passage d'admission d'air,
la conduite de carburant de démarrage est connectée au passage d'admission d'air entre le filtre à air et le cylindre,
le passage de réfrigérant comporte une entrée permettant à l'air d'entrer dans la génératrice et une sortie permettant à l'air de sortir de la génératrice,
le régulateur thermique est une porte thermique, et la porte thermique se trouve à la sortie du passage de réfrigérant.

12. Génératrice à carburant portative souple selon l'une quelconque des revendications précédentes, comprenant en outre un réservoir de carburant de démarrage, connecté fluidiquement à la conduite de carburant de démarrage, et contenant un carburant à faible point d'ébullition et faible point d'éclair,
dans laquelle le carburant à faible point d'ébullition et faible point d'éclair est de l'éther diéthylique,
le carburant à faible point d'ébullition et faible point d'éclair dans le réservoir de carburant de démarrage est pressurisé, et
le réservoir de carburant principal contient un carburant, et le carburant comprend un carburant diesel.

13. Procédé de fonctionnement de la génératrice à carburant portative souple selon l'une quelconque des revendications précédentes, comprenant :
le fonctionnement du moteur dans la gamme isotherme de 120 à 180° C, et
l'alimentation du moteur avec un carburant de service comprenant un carburant lourd.

14. Procédé de fabrication d'une génératrice à carburant portative souple (10), comprenant la modification d'une génératrice à essence portative,
dans lequel la modification comprend :
l'ajout d'un module de démarrage (18) comprenant un support de réservoir de carburant de démarrage (40) et une conduite de carburant de démarrage (44), dans lequel la conduite de carburant de démarrage est connectée fluidiquement à un passage d'admission d'air de la génératrice à essence portative,
l'ajout d'une porte thermique (50), le long du passage de réfrigérant de la génératrice à essence portative, et
le retard du calage de l'allumage de la bougie d'allumage (66).

15. Procédé selon la revendication 14, dans lequel :
la génératrice à essence portative comprend :
un logement de génératrice (14),
un filtre à air (62) le long d'un passage d'admission d'air qui fournit l'air pour la combustion du carburant, et,
un passage de réfrigérant comportant une entrée permettant à l'air d'entrer dans la génératrice et une sortie permettant à l'air de sortir de la génératrice
dans lequel le module de démarrage (18) est attaché au logement de génératrice,
le module de démarrage comprenant en outre une enceinte de carburant de démarrage (30), l'enceinte de carburant de nettoyage comprenant un accès à un bouton de carburant de démarrage (34) et un couvercle de bouton de carburant de démarrage (32),
la conduite de carburant de démarrage (44) est connectée au passage d'admission d'air entre le filtre à air et le cylindre (68), et
la porte thermique (50) se trouve à la sortie du passage de réfrigérant.
